# EUROPÄISCHE PATENTSCHRIFT

(11) **EP 3 290 757 B1**
(45) Veröffentlichungstag und Bekanntmachung des Hinweises auf die Patenterteilung: **18.12.2019**
(21) Anmeldenummer: 17188141.0
(22) Anmeldetag: 28.08.2017
(51) Int. Cl.: F16K 5/04, F16K 5/18, F01P 7/14

(54) **DREHSCHIEBER MIT KOMPAKTER DICHTUNGSEINHEIT**
ROTARY VALVE WITH COMPACT SEALING UNIT
SOUPAPE À BOISSEAU DOTÉE DE L'UNITÉ D'ÉTANCHÉITÉ COMPACTE

(30) Priorität: 05.09.2016 DE 102016116549
(43) Veröffentlichungstag der Anmeldung: 07.03.2018
(73) Patentinhaber: Pierburg GmbH, 41460 Neuss (DE)
(72) Erfinder: BADEN, Matthias, 40237 Düsseldorf (DE); KREBBER-HORTMANN, Karl, 40221 Düsseldorf (DE); BRUNETTI, Costantino, 58730 Fröndenberg (DE)
(74) Vertreter: Patentanwälte ter Smitten Eberlein-Van Hoof Rütten Partnerschaftsgesellschaft mbB

(56) Entgegenhaltungen:
- DE-A1- 1 425 699
- DE-A1-102009 014 047
- DE-U1-202015 100 400
- FR-A- 1 222 752
- US-A- 2 383 983
- US-A- 2 417 400
- US-A1- 2015 059 900

## Beschreibung

Die Erfindung betrifft ein Drehschieberventil eines Kraftfahrzeug-Kühlkreislaufs, mit einem Ventilgehäuse, einem Regelkörper, der beweglich in dem Ventilgehäuse angeordnet ist und eine zylindrische Außenkontur aufweist, wobei durch Bewegung des Regelkörpers ein Durchströmungsquerschnitt zwischen einem ersten Ventilanschluss und einem senkrecht zu einer Ventil-Längsachse des Regelkörpers angeordneten zweiten Ventilanschluss regelbar ist, und einer Dichtungseinheit, die innerhalb des zweiten Ventilanschlusses auf die Außenkontur des Regelkörpers aufgesetzt ist, wobei die Dichtungseinheit ein Dichtelement zur gleitbeweglichen Abdichtung, ein Trägerelement zum Tragen zumindest des Dichtelements und ein Federelement zur axialen Vorspannung des Dichtelements aufweist, wobei das Dichtelement mit einer dem Regelkörper zugewandten axialen Dichtungs-Stirnseitenfläche an der Außenkontur des Regelkörpers anliegt, und das Trägerelement mit einem dem Regelkörper zugewandten ersten axialen Ende an dem Dichtelement und mit einem dem Regelkörper abgewandten zweiten axialen Ende an dem Federelement anliegt.

Derartige zylindrische Drehschieber dienen zur stufenlosen Regelung eines strömenden Mediums, insbesondere eines Kühlmittelstroms in einem Kraftfahrzeug, beispielsweise zur Klimatisierung eines Fahrzeuginnenraums, zur Kühlung eines Motors, einer Batterie oder anderer Aggregate. Solche Drehschieber weisen zumeist eine axiale Ventil-Längsachse auf, um die und/oder entlang derer der zylindrische Regelkörper innerhalb eines Ventilgehäuses bewegbar gelagert ist. Das Drehschieberventil weist in der Regel zwei Ventilanschlüsse auf, es kann aber auch mehr als zwei Ventilanschlüsse aufweisen. Zur Vermeidung einer Leckageströmung zwischen einem ersten Ventilanschluss, insbesondere einem Ventileinlass, und einem zweiten Ventilanschluss, insbesondere einem Ventilauslass, im geschlossenen Zustand des Drehschiebers ist in der Regel zumindest eine Dichtungseinheit vorgesehen. Die Dichtungseinheit ist zumeist koaxial zu einem Anschlussstutzen angeordnet und weist eine zur Ventil-Längsachse senkrecht angeordnete Dichtungs-Längsachse auf. Zur gleitbeweglichen Abdichtung liegt die Dichtungseinheit zumeist mit einem axial wirkenden Dichtbereich an der Außenkontur des Regelkörpers auf. Für eine am Umfang der Dichtungseinheit zusätzlich wirkende Abdichtung weist die Dichtungseinheit üblicherweise einen separaten Dichtungsring auf. Dadurch kann - zur Vermeidung einer Überströmung an der Außenkontur des Regelkörpers - ein mit dem ersten Ventilanschluss verbundener, zwischen dem Ventilgehäuse und dem Regelkörper ausgebildeter Zwischenraum gegenüber dem zweiten Ventilanschluss effektiv abgedichtet werden. Es sollte deutlich sein, dass der am Regelkörper radial angeordnete zweite Ventilanschluss als ein Ventileinlass oder Ventilauslass dienen kann. Gleiches gilt auch für den ersten Ventilanschluss, der zudem axial oder radial an dem Ventilgehäuse angeordnet sein kann.

Aus der DE 10 2009 025 351 A1 ist ein Drehschieber mit einer Dichtungseinheit bekannt, die ein Dichtungselement sowie ein als Träger dienendes Federelement aufweist. Das Federelement kann radial außen um das balgartig geformte Dichtelement eingesetzt oder von dem Dichtelement vollständig umgeben sein. Bei einer Ausbildung einer zylindrischen Außenkontur des Regelkörpers, ist die Anpresskraft des Dichtelements auf den Regelkörper jedoch über den Umfang unterschiedlich groß ausgebildet, so dass ein Abheben des Dichtelements von der Außenkontur des Regelkörpers und somit ein Leckagestrom auftreten kann.

Zusätzlich ist aus der US 2,417,400 ein Drehschieberventil bekannt, dessen Regelkörper zum Gehäuse über ein Dichtungselement abgedichtet ist, welches aus einem Kunststoffring besteht, dessen erster axialer Abschnitt zwischen dem Anschlussstutzen und dem Ventilgehäuse eingeklemmt ist, dessen zweiter axialer Abschnitt radial gegen eine Innenwand des Gehäuse anliegt und in dessen dritten axialen Abschnitt ein metallischer Ring angeordnet ist, wobei der dritte axiale Abschnitt gegen den Regelkörper zur Abdichtung anliegt. Der dritte axiale Abschnitt weist zusätzlich im Vergleich zum zweiten axialen Abschnitt einen kleineren Innendurchmesser auf, so dass ein Absatz gebildet wird, gegen den eine Feder vorgespannt anliegt.

Aus der US 2,383,983 ist ein Drehschieberventil mit einem Regelkörper bekannt, der durch einen O-Ring zum Gehäuse abgedichtet wird. Dieser O-Ring liegt in einer radial äußeren Ausnehmung eines Trägerkörpers, der an seiner entgegengesetzten, zum Anschlussstutzen weisenden Seite durch ein Federelement in Richtung des Regelkörpers belastet wird.

Die US 2015/0059900 A1 offenbart ein Drehschieberventil, dessen Dichtelement gegen den Regelkörper durch ein Federelement in Richtung des Regelkörpers belastet wird.

Zusätzlich offenbart die DE 20 2015 100 400 U1 einen Dichtungskörper für ein Drehschieberventil, der aus einem Gleit- und Hauptkörper besteht, in den ein Verstärkungselement eingebettet ist.

Der Erfindung liegt daher die Aufgabe zugrunde, einen Drehschieber bereitzustellen, der eine zuverlässige, dauerhafte und verschleißarme, insbesondere sowohl axiale als auch radiale, Abdichtung ermöglicht. Zudem sollte der Drehschieber in der Herstellung und Montage kostengünstig sein.

Die Lösung der Aufgabe erfolgt erfindungsgemäß durch einen Drehschieber mit den Merkmalen des Anspruchs 1.

Erfindungsgemäß weist das Dichtelement einen axialen Befestigungsabschnitt auf, der sich durch eine axiale Aufnahme des Trägerelements erstreckt, wobei die axiale Aufnahme des Trägerelementes korrespondierend zum Befestigungsabschnitt des Dichtelementes ausgebildet ist.

Die Dichtungseinheit weist folglich in axialer Richtung des zweiten Ventilanschlusses einen im Wesentlichen schichtweisen axialen Aufbau auf, umfassend das Dicht-, Träger- und Federelement. Diese Komponenten der Dichtungseinheit sind nicht zwingend axial aneinandergereiht angeordnet sein, sondern sind auch - zumindest teilweise - axial überlappend angeordnet sein. Beispielsweise liegt das axial zwischen dem Regelkörper und dem Federelement angeordnete Trägerelement mit einem dem Regelkörper zugewandten axialen Ende nicht zwingend an einem dem Regelkörper abgewandten axialen Ende des Dichtelements an, sondern erstreckt sich über das axiale Ende des Dichtelements hinaus in Richtung des Regelkörpers und liegt erst in einem axialen Befestigungsbereich des Dichtelements axial an dem Dichtelement an. Insbesondere in diesem Bereich sind folglich das Dichtelement und das Trägerelement axial überlappend angeordnet. Es sollte zudem deutlich sein, dass vorliegend unter dem Begriff 'anliegen' nicht zwingend zu verstehen ist, dass die aneinander anliegenden Bauteile separat ausgebildet sind. Vielmehr können beide Bauteile als ein einziges, insbesondere einteiliges, Bauteil hergestellt sein, beispielsweise durch ein an sich bekanntes thermisches Auftragen oder Aufspritzen des einen Bauteils auf das jeweils Andere.

Das Dichtelement und das Trägerelement können folglich zumindest in dem Befestigungsabschnitt radial überlappend angeordnet sein. Der Befestigungsabschnitt dient insbesondere einer Zentrierung und Befestigung des Dichtelements an dem Trägerelement. Insbesondere bei einem auf das Trägerelement aufgespritzten Dichtelement dient der Befestigungsabschnitt einer sicheren Fixierung des Dichtelements an dem Trägerelement. Der Befestigungsabschnitt ist bevorzugt in axialer Erstreckung des Dichtelements im Wesentlichen mittig an dem Dichtelement angeordnet. In dem Befestigungsabschnitt kann das Dichtelement zumindest einen axialen Steg, Stift, Säule, Strebe oder Haken aufweisen, der sich durch eine axiale Aufnahme des Trägerelements erstreckt. Die Aufnahme des Trägerelements ist korrespondierend zu der Ausgestaltung des Befestigungsabschnitts des Dichtelements ausgebildet. Die Aufnahme ist als Bohrung, Nut oder Hinterschneidung ausgebildet. Eine als Bohrung ausgebildete Aufnahme kann als eine Sacklochbohrung oder als eine axial durch das Trägerelement durchgehende Bohrung ausgebildet sein. Eine als Nut ausgebildete Aufnahme ist vorteilhafterweise an einem axialen Ende des Trägerelements ausgebildet und bevorzugt nur einseitig in Richtung des Dichtelements offen. Die Nut oder Hinterschneidung kann ferner radial außen an dem Trägerelement angeordnet sein, so dass das Dichtelement beispielsweise mit einem umlaufenden Haken von radial außen in die Nut oder Hinterschneidung eingehakt oder aufgespritzt werden kann. Die Nut oder Hinterschneidung kann vollumfänglich oder - zur vereinfachten Ausrichtung in Umfangsrichtung - nur bereichsweise über den Umfang an dem Trägerelement ausgebildet sein. Dadurch kann das Dichtelement in relativ einfacher Weise an dem Trägerelement befestigt werden. Ferner kann eine besonders stabile und formsteife Befestigung des Dichtelements an dem Trägerelement geschaffen sein.

Das Dichtelement, das Trägerelement und das Federelement sind jeweils ringförmig ausgebildet und können separat oder bevorzugt zusammenhängend ausgebildet sein. Insbesondere kann das Dichtelement an das Trägerelement aufgespritzt sein. Folglich können zumindest das Dichtelement und das Trägerelement einteilig ausgebildet sein. Bevorzugt sind auch das Trägerelement und das Federelement einteilig und/oder einstückig ausgebildet. Im zuletzt genannten Fall kann das Federelement beispielsweise als ein von einem dem Regelkörper abgewandten axialen Ende des Trägerelements hervorstehender Federschenkel ausgebildet sein. Es sollte deutlich sein, dass die Dichtungseinheit grundsätzlich vor einer Montage an dem Drehgeber hergestellt wird. Das Dichtelement ist bevorzugt aus Kunststoff hergestellt und relativ weich ausgebildet. Dadurch kann eine besonders effektive Abdichtung erreicht werden. Auch das Trägerelement und das Federelement können aus Kunststoff hergestellt sein.

Durch die erfindungsgemäße Ausgestaltung können das Dichtelement, das Trägerelement und das Federelement - je nach Anforderung - unabhängig voneinander jeweils relativ individuell ausgebildet und hergestellt sein, so dass für jeden Ventilanschluss eine optimale Dichtwirkung erreicht werden kann. Beispielsweise kann das Dichtelement hinsichtlich der Krümmung einer Dichtungsfläche, des Dichtmaterials, der Elastizität und/oder der axialen Höhe individuell hegestellt sein. Die Möglichkeit der Kombination der einzelnen Komponenten der Dichtungseinheit resultiert in einer Vielzahl an möglichen Dichtungseinheiten. Dies ermöglicht sowohl eine relativ kostengünstige Herstellung und Montage des Drehschiebers als auch eine besonders effektive Abdichtung. Insbesondere kann an einer Dichtfläche eine gleichmäßig verteilte Vorspannung erreicht werden, so dass die jeweils auf die Dichtfläche wirkende Anpresskraft über den gesamten Umfang des Dichtelements besonders homogen ausgebildet und dadurch eine besonders effektive Abdichtung ermöglicht ist.

Vorzugsweise ist das Dichtelement sowohl In einem entspannten Zustand als auch in einem vorgespannten Zustand als ein zu der Außenkontur des Regelkörpers komplementär gekrümmter Dichtring ausgebildet. Dadurch kann über den gesamten Umfang des Dichtelements eine besonders effektive Abdichtung erreicht werden. Ferner kann ein relativ kompaktes Dichtelement bereitgestellt werden, das nur einen relativ geringen Platzbedarf erfordert, so dass der Drehschieber insgesamt relativ kompakt und platzsparend aufgebaut sein kann.

Vorzugsweise ist das Dichtelement auf das Trägerelement aufgespritzt. Dadurch kann das Dichtelement an dem Trägerelement dauerhaft in einer bestimmten Position fixiert sein, so dass eine besonders effektive und dauerhafte Dichtwirkung erreicht werden kann. Das Aufspritzen kann durch ein an sich bekanntes Verfahren erfolgen. Das Dichtelement kann vollständig oder teilweise aufgespritzt sein. Beispielsweise kann das Dichtelement vor einem Aufspritzen auf oder Verbinden mit dem Trägerelement zumindest teilweise bereits separat hergestellt sein.

Vorzugsweise weist das Dichtelement einen umlaufenden radialen Schenkel auf, mit dem das Dichtelement an dem Ventilgehäuse und/oder einem Anschlussstutzen radial anliegt. Folglich kann das Dichtelement mit einer axialen Stirnseitenfläche an der Außenkontur des Regelkörpers und mit dem umlaufenden radialen Schenkel an dem Ventilgehäuse und/oder Auslassstutzen anliegen. Dadurch kann mittels eines einzigen Dichtelements sowohl eine axiale als auch eine radiale Abdichtung an dem zweiten Ventilanschluss erreicht werden. Ein zusätzlicher Dichtring zur radialen Abdichtung ist nicht erforderlich, so dass die Anzahl der Bauteile gesenkt und die Herstellung und Montage relativ kostengünstig ist.

Vorzugsweise weist das Dichtelement eine dem Regelkörper zugewandte axiale Anlagefläche und eine dem Regelkörper abgewandte axiale Anlagefläche auf, wobei die dem Regelkörper abgewandte axiale Anlagefläche axial zwischen der dem Regelkörper zugewandten axialen Anlagefläche und der dem Regelkörper zugewandten axialen Dichtungs-Stirnseitenfläche angeordnet ist, und das Dichtelement sowohl mit der dem Regelkörper zugewandten axialen Anlagefläche als auch mit der dem Regelkörper abgewandten axialen Anlagefläche an dem Trägerelement anliegt. Dadurch kann eine besonders sichere und dauerhafte Positionierung und Fixierung des Dichtelements an dem Trägerelement sowie ein besonders kompaktes und relativ einfach zu montierendes Dichtelement bereitgestellt werden. Die dem Regelkörper zugewandte axiale Anlagefläche ist bevorzugt an einem dem Regelkörper abgewandten axialen Endbereich des Dichtelements ausgebildet. Die dem Regelkörper abgewandte Anlagefläche kann insbesondere in axialer Erstreckung des Dichtelements im Wesentlichen mittig an dem Dichtelement angeordnet sein, nicht zwingend an einem axialen Ende des Dichtelements. Zusätzlich kann das Dichtelement zur weiteren Verbesserung der Ausrichtung des Dichtelements gegenüber dem Trägerelement mit einer dem Regelkörper abgewandten Stirnseitenfläche an dem Trägerelement anliegen, wobei die dem Regelkörper abgewandte Stirnseitenfläche bevorzugt an einem dem Regelkörper abgewandten axialen Ende des Dichtelements angeordnet ist.

Vorzugsweise weist das Dichtelement einen Innendurchmesser und einen Außendurchmesser auf, die jeweils im Wesentlichen einem Innendurchmesser und einem Außendurchmesser des Trägerelements entsprechen. Das Dichtelement weist insbesondere eine radiale Materialstärke bzw. Breite auf, die im Wesentlichen der Materialstärke des Trägerelements entspricht. Zudem entspricht der Innendurchmesser und Außendurchmesser des Dichtelements bevorzugt auch jeweils dem Innendurchmesser und Außendurchmesser des Federelements sowie des Anschlussstutzens. Dadurch kann das Dichtelement in der axialen Anordnung von Trägerelement, Federelement und Anschlussstutzen radial nicht hervorstehen, so dass das Dichtelement weder eine radiale Außenbegrenzung, beispielsweise durch das Ventilgehäuse, noch einen durch das Trägerelement ausgebildeten Fluidstrom beeinflusst. Insbesondere stellt das Dichtelement in dem Strömungskanal keinen Strömungswiderstand dar. Ferner kann die von dem Trägerelement auf das Dichtelement in axialer Richtung wirkende Vorspannkraft über die gesamte Materialstärke bzw. Breite des Dichtrings gleichmäßig verteilt an dem Dichtelement anliegen, so dass das Dichtelement über die gesamte Breite des Dichtrings relativ homogen auf die Außenkontur des Regelkörpers vorgespannt ist und somit ein bereichsweises Abheben des Dichtelements von dem Regelkörper vermieden werden kann.

Vorzugsweise weist das Dichtelement in dessen axialer Erstreckungsrichtung eine axiale Aufbauhöhe bzw. Axial-Höhe auf, die über den gesamten Umfang des Dichtelements konstant ausgebildet ist. Die Aufbauhöhe ist stets in Richtung der Dichtungs-Längsachse ausgerichtet. Dadurch kann das Dichtelement über dessen gesamten Umfang von dem Trägerelement, welches mittels des Federelements axial vorgespannt ist, besonders gleichmäßig an der Außenkontur des Regelkörpers vorgespannt sein, so dass über den Umfang des Dichtelements ein bereichsweises Abheben von dem Regelkörper vermieden und somit eine dauerhaft zuverlässige Abdichtung erreicht werden kann.

Vorzugsweise weist das Dichtelement in dem axialen Befestigungsabschnitt zumindest eine axiale Strebe auf. Besonders bevorzugt ist über den Umfang des Dichtelements eine Vielzahl von axialen Streben vorgesehen, die über den Umfang des Dichtelements gleichmäßig verteilt sind. Dazu kann die Aufnahme als eine Vielzahl von über den Umfang des Trägerelements gleichmäßig verteilten Bohrungen ausgebildet sein, wobei die Bohrungen zu dem Befestigungsabschnitt des Dichtelements korrespondierend ausgebildet sind, insbesondere zu der Anzahl und Anordnung der in dem Befestigungsabschnitt des Dichtelements ausgebildeten axialen Streben. Dadurch kann sich bevorzugt jede Strebe durch jeweils eine an dem Trägerelement ausgebildete, vorteilhafterweise durchgehende, Bohrung erstrecken. Die Strebe kann folglich von dem Trägerelement radial vollständig umgeben sein. An beiden axialen Enden der Streben kann das Dichtelement eine in Umlaufrichtung zusammenhängende bzw. ringförmige Kontur aufweisen. Dadurch kann das Dichtelement von dem Trägerelement besonders effektiv gehalten werden. Die Strebe kann grundsätzlich bereits vor einem Zusammenführen des Dichtelements und des Trägerelements an dem Dichteelement ausgebildet sein, bevorzugt entsteht die Strebe erst bei einem Aufspritzen des Dichtelements auf das Trägerelement. Insbesondere kann es vorgesehen sein, dass das Dichtelement zumindest in dem Befestigungsabschnitt mit dem Trägerelement fest verbunden ist, beispielsweise durch thermisches Aufspritzen oder Kleben. Dadurch kann eine besonders stabile und formsteife Befestigung des Dichtelements an dem Trägerelement bereitgestellt werden, so dass beispielsweise beim axialen Vorspannen ein bereichsweiser radialer Ausbruch des Dichtelements gegenüber dem Trägerelement verhindert werden kann.

Vorteilhafterweise ist die Aufnahme an einem dem Regelkörper zugewandten axialen Ende des Trägerelements ausgebildet. Insbesondere eine als Bohrung oder Nut ausgebildete Aufnahme kann an einer dem Dichtelement zugewandten Träger-Stirnseitenfläche des Trägerelements angeordnet sein, so dass der an dem Dichtelement angeordnete Befestigungsabschnitt in relativ einfacher Weise axial in die Aufnahme eingeschoben oder hierin aufgespritzt werden kann.

Vorzugsweise weist die Aufnahme zumindest eine axiale Öffnung auf, die sich an einer von dem Trägerelement radial hervorstehenden umlaufenden Schulter von einer dem Regelkörper zugewandten axialen Träger-Stirnseitenfläche bis zu einer dem Regelkörper abgewandten axialen Träger-Anlagefläche erstreckt, wobei sowohl an der dem Regelkörper zugewandten axialen Träger-Stirnseitenfläche als auch an der dem Regelkörper abgewandten axialen Träger-Anlagefläche das Dichtelement anliegt. Die axiale Öffnung kann folglich als eine axial durch das Trägerelement verlaufende Bohrung ausgebildet sein. Die Schulter ist bevorzugt an dem dem Regelkörper zugewandten axialen Ende des Trägerelements ausgebildet. Sofern das Trägerelement an diesem axialen Ende eine - beispielsweise gemäß der Außenkontur des Regelkörpers - gekrümmte Kontur aufweist, folgt auch die Schulter dieser Kontur. Dadurch kann die Schulter als eine Art sphärischer Ring radial außen am Trägerelement umlaufend angeordnet sein. Dadurch kann das Dichtelement über dessen gesamten Umfang besonders homogen von dem Trägerelement in Richtung des Regelkörpers vorgespannt sein, so dass die auf die Dichtfläche wirkende Anpresskraft über den gesamten Umfang des Dichtelements besonders homogen ausgebildet und dadurch eine besonders effektive Abdichtung ermöglicht ist. Grundsätzlich kann das Dichtelement mit einer in dem Befestigungsabschnitt ausgebildeten axialen Strebe in das Trägerelement axial eingeschoben werden und ein axial überstehendes Material der Strebe zur Fixierung des Dichtelements an dem Trägerelement umgebogen oder anderweitig verformt werden, so dass das Dichtelement sowohl an der dem Regelkörper zugewandten axialen Träger-Stirnseitenfläche als auch an der dem Regelkörper abgewandten axialen Träger-Anlagefläche des Trägerelements anliegt. Bevorzugt wird das Dichtelement auf das Trägerelement aufgespritzt, wobei das Dichtelementmaterial auch die axiale Öffnung des Trägerelements durchdringt. Dadurch kann eine besonders stabile und formsteife Befestigung des Dichtelements an dem Trägerelement bereitgestellt werden, so dass beispielsweise beim axialen Vorspannen ein bereichsweiser radialer Ausbruch des Dichtelements gegenüber dem Trägerelement verhindert werden kann.

Vorzugsweise weist das Trägerelement an einem dem Regelkörper zugewandten axialen Ende eine zu der Außenkontur des Regelkörpers komplementär gekrümmte Stirnseitenkontur und an einem dem Regelkörper abgewandten axialen Ende eine ebene Stirnseitenkontur auf. Besonders bevorzugt liegt das Trägerelement mit der gekrümmten Stirnseitenkontur an dem Dichtelement flächig an. Dadurch kann der Anschlussstutzen mit der dem Regelkörper zugewandten Seite über den gesamten Umfang an dem Dichtring anliegen und somit eine homogene Anpresskraft des Dichtelements auf den Regelkörper bewirken, so dass eine besonders gute Abdichtung ermöglicht ist. Das Trägerelement ist hierbei bevorzugt formsteif ausgebildet. Dadurch kann der Träger eine in einer Ebene von dem Federelement übertragene Anpresskraft in relativ einfacher und kompakter Weise auf die gemäß der Außenkontur des Regelkörpers gekrümmte Form des Dichtelements übertragen.

Vorzugsweise ist das Federelement an einer dem Regelkörper abgewandten axialen Träger-Stirnseitenfläche des Trägerelements angeordnet und liegt mit einem dem Regelkörper abgewandten axialen Federende an einem am zweiten Ventilanschluss angeordneten Anschlussstutzen vorgespannt an. Dadurch kann eine axiale Vorspannung der Dichtungseinheit in Richtung des Regelkörpers in besonders einfacher Weise realisiert werden. Bevorzugt ist das Federelement mit dem Trägerelement einstückig verbunden, beispielsweise als ein von dem Trägerelement axial in Richtung des Anschlussstutzens hervorstehender Federschenkel. Dadurch kann das Federelement in besonders einfacher Weise axial zwischen dem Trägerelement und einer Stirnseitenfläche des Anschlussstutzens angeordnet sein. Alternativ kann das Federelement separat hergestellt sein und an der dem Regelkörper abgewandten axialen Träger-Stirnseitenfläche des Trägerelements anliegen. Dabei ist das Federelement bevorzugt als ein aus Kunststoff hergestellter separater Federring ausgebildet, der bei der Montage des Drehschiebers von außen axial auf das Trägerelement aufgesetzt und durch den Anschlussstutzen in Richtung des Regelkörpers vorgespannt wird.

Nachfolgend wird die Erfindung anhand einer bevorzugten Ausführungsform unter Bezugnahme auf die anliegenden Zeichnungen näher erläutert.
Figur 1 zeigt schematisch einen Ausschnitt einer perspektivischen Ansicht eines erfindungsgemäßen Drehschieberventils mit einer Dichtungseinheit in teilgeschnittener Darstellung,
Figuren 2a und 2b zeigen jeweils einen Ausschnitt einer Detailansicht des Drehschieberventils, wobei die Ansichten um 90° zueinander gedreht sind, und
Figur 3 zeigt schematisch die Dichtungseinheit in einer gesprengten Darstellung.

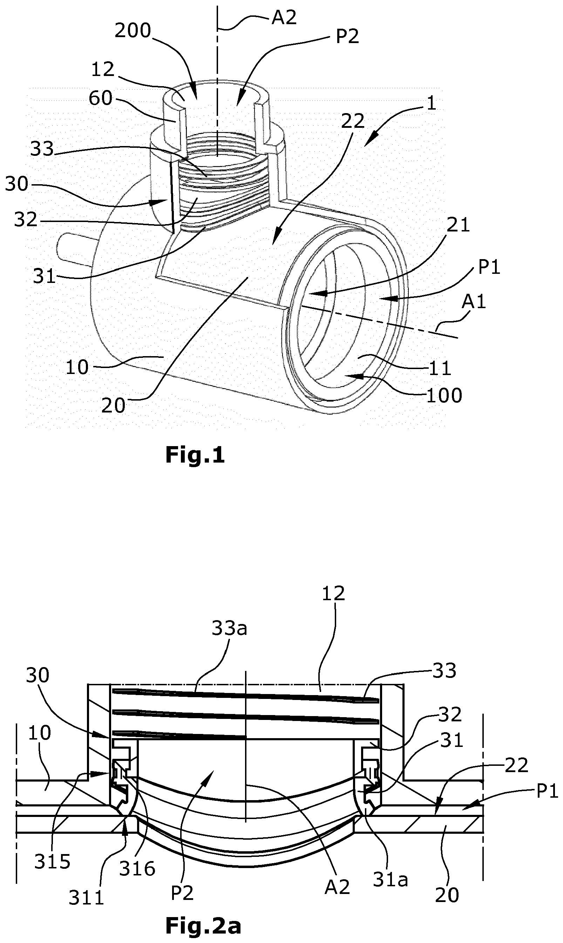

In der Figur 1 ist ein Ausschnitt eines erfindungsgemäßen Drehschieberventils 1 eines nicht dargestellten Kraftfahrzeug-Kühlkreislaufs gezeigt. Das Drehschieberventil 1 umfasst ein Ventilgehäuse 10 mit einem ersten Ventilanschluss 11 und einem zweiten Ventilanschluss 12. Der erste Ventilanschluss 11 ist vorliegend einem Ventileinlasskanal 100 zugeordnet, der koaxial zu einer Ventil-Längsachse A1 angeordnet ist. An dem ersten Ventilanschluss 11 liegt ein einlassseitiger Druck P1 an. Der zweite Ventilanschluss 12 ist einem Ventilauslasskanal 200 zugeordnet, der koaxial zu einer senkrecht zu der Ventil-Längsachse A1 ausgerichteten Dichtungs-Längsachse A2 angeordnet ist. An dem zweiten Ventilanschluss 12 liegt ein auslassseitiger Druck P2 an, der üblicherweise geringer als der einlassseitige Druck P1 ist. Es sollte deutlich sein, dass der zweite Ventilanschluss 12 grundsätzlich auch einen Ventileinlass bilden kann. Innerhalb des Ventilgehäuses 10 zwischen dem ersten Ventilanschluss 11 und dem zweiten Ventilanschluss 12 ist ein um die Ventil-Längsachse A1 drehbar und/oder entlang der Ventil-Längsachse A1 verschiebbar gelagerter Regelkörper 20 zur stufenlosen Regelung eines Durchgangskanals 21 angeordnet.

Der Regelkörper 20 ist als ein zylindrischer Drehschieber ausgebildet und weist einen von einem Fluid durchströmbaren Durchgangskanal 21 auf. Beispielsweise durch Drehen des Regelkörpers 20 um die Ventil-Längsachse A1 wird der Durchgangskanal 21 zwischen dem ersten Ventilanschluss 11 und dem zweiten Ventilanschluss 12 freigegeben oder verschlossen. Um ein Drehen des Regelkörpers 20 zu ermöglichen, ist der Regelkörper 20 spielbehaftet gelagert, wodurch auch an der zylindrischen Außenkontur 22 des Regelkörpers 20 der dem ersten Ventilanschluss 11 zugeordnete einlassseitige Druck P1 anliegt. Zur Vermeidung eines Leckagestroms zwischen dem ersten Ventilanschluss 11 und dem zweiten Ventilanschluss 12, insbesondere an der zylindrischen Außenkontur 22 des Regelkörpers 20, ist an dem zweiten Ventilanschluss 12 eine Einrichtung zur Abdichtung vorgesehen. Dazu ist an dem zweiten Ventilanschluss 12 zwischen dem Regelkörper 20 und einem Anschlussstutzen 60 eine Dichtungseinheit 30 angeordnet.

Die Dichtungseinheit 30 weist einen in Richtung senkrecht zur Ventil-Längsachse A1 angeordneten im Wesentlichen schichtweisen axialen Aufbau auf, umfassend in der Reihenfolge von dem Regelkörper 20 zu dem Anschlussstutzen 60 ein Dichtelement 31, das zur gleitbeweglichen Abdichtung an der Außenkontur 22 des Regelkörpers 20 anliegt, ein Trägerelement 32 zum Tragen zumindest des Dichtelements 31 und ein Federelement 33 zur axialen Vorspannung des Dichtelements 31 gegen den Regelkörper 20. Vor einer Montage der Dichtungseinheit 30 an dem Drehschieber werden die einzelnen Komponenten der Dichtungseinheit 30, nämlich Dichtelement 31, Trägerelement 32 und Federelement 33, zu der Dichtungseinheit 30 hergestellt. Dies kann insbesondere durch ein Aufspritzen des Dichtelements 31 auf das Trägerelement 32 erfolgen. Das Federelement 33 kann separat hergestellt sein und wird vor einer Montage der Dichtungseinheit 30 bevorzugt mit dem Trägerelement 32 verbunden, beispielswiese durch Montagespritzen oder Kleben. Sodann wird die als einteiliges Bauteil erzeugte Dichtungseinheit 30 von radial außen in den Auslasskanal 200 des Ventilgehäuses 10 eingeschoben und durch Aufsetzen des Anschlussstutzens 60 verspannt. Dadurch ist eine Drehschieber-Dichtung bereitgestellt, die sowohl relativ kompakt ausgebildet, kostengünstig herstell- und montierbar ist, als auch eine besonders effektive Abdichtung ermöglicht.

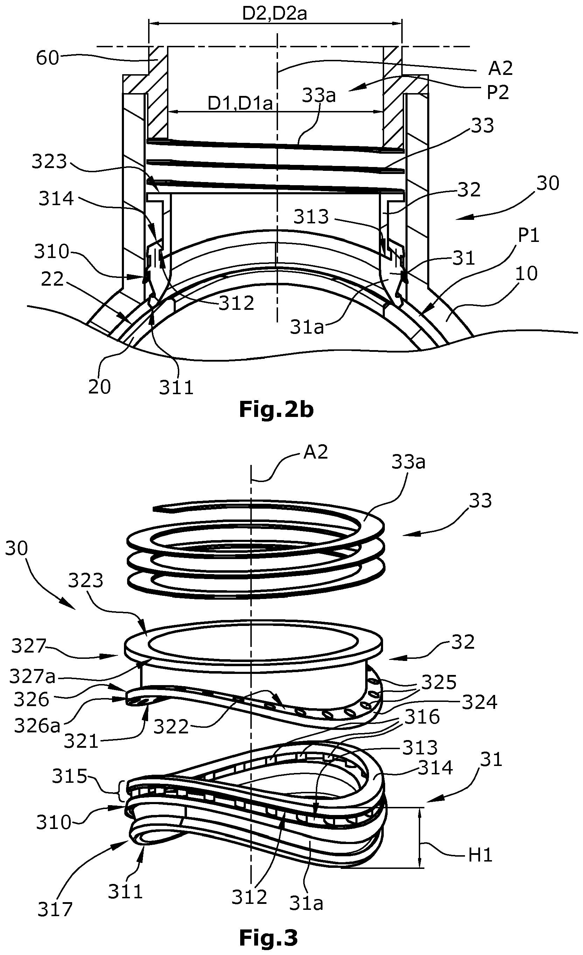

Das Dichtelement 31 ist als ein zu der zylindrischen Außenkontur 22 des Regelkörpers 20 komplementär gekrümmter Dichtring 31a ausgebildet. Dadurch ist eine besonders kompakte Dichtung bereitgestellt, die nur einen relativ geringen Material- und Platzbedarf zwischen Regelkörper 20 und Anschlussstutzen 60 erfordert, so dass der Drehschieber insgesamt relativ kostengünstig, kompakt und platzsparend aufgebaut sein kann. Die Krümmung des Dichtrings 31a ist - wie insbesondere in den Figuren 2a, 2b und 3 erkennbar - in Umfangsrichtung korrespondierend zu der Außenkontur 22 unterschiedlich stark konkav ausgebildet, so dass der Dichtring 31a mit einem dem Regelkörper 20 zugewandten axialen Ende 317 an der zylindrischen Außenkontur 22 umlaufend anliegen kann. Der Dichtring 31a weist eine in Richtung der Dichtungs-Längsachse A2 ausgerichtete axiale Höhe H1 auf, die über den gesamten Umfang des Dichtrings 31a konstant ausgebildet ist, so dass eine auf das Dichtelement 31 wirkende axiale Vorspannung eine über den Umfang gleichmäßig verteilte Anpresskraft bewirkt und somit ein bereichsweises Abheben des Dichtelements 31 von der Außenkontur 22 des Regelkörpers 20 verhindert werden kann. Der Dichtring 31a weist einen Innendurchmesser D1, der vorliegend im Wesentlichen einem Innendurchmesser D1a sowohl des Trägerelements 32, des Federelements 33 als auch des Anschlussstutzens 60 entspricht, und einen Außendurchmesser D2 auf, der vorliegend im Wesentlichen einem Außendurchmesser D2a sowohl des Trägerelements 32, des Federelements 33 als auch des Anschlussstutzens 60 entspricht, so dass der Dichtring 31a radial von dem Trägerelement 32, dem Federelement 33 oder dem Anschlussstutzen 60 nicht hervorsteht und dadurch in dem Strömungskanal insbesondere keinen Strömungswiderstand darstellt.

Das Dichtelement 31 kann zusätzlich an dem dem Regelkörper 20 zugewandten axialen Ende 317 eine zu der zylindrischen Außenkontur 22 des Regelkörpers 20 korrespondierende, schräge bzw. konische erste axiale Dichtungs-Stirnseitenflächen 311 aufweisen, so dass das Dichtelement 31 mit der ersten dem Regelkörper 20 zugewandten Stirnseitenflächen 311 flächig an der zylindrischen Außenkontur 22 anliegt. Die erste dem Regelkörper 20 zugewandte Stirnseitenfläche 311 ist insbesondere in Richtung weg von einer von der Ventil-Längsachse A1 und der Dichtungs-Längsachse A2 aufgespannten Ebene zunehmend schräg ausgebildet. Dadurch kann die auf die Dichtfläche 311 wirkende Anpresskraft über den gesamten Umfang des Dichtelements 31 besonders homogen ausgebildet sein, so dass eine besonders effektive Abdichtung ermöglicht ist.

Wie insbesondere in den Figuren 2a und 2b erkennbar, liegt das Dichtelement 31 mit einem Schenkel 310 radial außen an dem Ventilgehäuse 10 an, so dass in diesem Bereich zusätzlich eine radiale Abdichtung zwischen Dichtelement 31 und Ventilgehäuse 10 bereitgestellt ist. Dieser radiale Anlagebereich ist in axialer Erstreckung des Dichtelements 31 im Wesentlichen mittig angeordnet, nicht an einem axialen Ende des Dichtelements 31. Im annähernd gleichen axialen Bereich ist an dem Dichtelement 31 an einem axialen Absatz eine dem Regelkörper 20 abgewandte axiale Anlagefläche 313 angeordnet, mit der das Dichtelement 31 an dem Trägerelement 32 axial anliegt. An einem dem Trägerelement 32 zugewandten axialen Ende des Dichtelements 31 weist das Dichtelement 31 eine weitere dem Regelkörper zugewandte axiale Anlagefläche 312 auf, mit der das Dichtelement 31 ebenfalls an dem Trägerelement 32 axial anliegt. Darüber hinaus kann das Dichtelement 31 grundsätzlich mit einer dem Regelkörper 20 abgewandten Stirnseitenfläche 314 zusätzlich an dem Trägerelement 32 anliegen, was jedoch vorliegend nicht der Fall ist.

Das Dichtelement 31 weist axial zwischen der dem Regelkörper 20 abgewandten axialen Anlagefläche 313 und der dem Regelkörper zugewandten axialen Anlagefläche 312 einen axialen Befestigungsabschnitt 315 zur Befestigung des Dichteelements 31 an dem Trägerelement 32 auf. In dem Befestigungsabschnitt 315 erstreckt sich das Dichtelement 31 mit mehreren, über den Umfang des Dichtelements 31 gleichmäßig verteilten, axialen Streben 316 durch jeweils eine an dem Trägerelement 32 ausgebildete axiale Aufnahme 325, so dass die Streben 316 jeweils von dem Trägerelement 32 radial vollständig umgeben sind. Die Streben 316 sind insbesondere bei einem Aufspritzen des Dichteelements 31 auf das Trägerelement 32 entstanden.

Wie insbesondere in der gesprengten Darstellung in Figur 3 erkennbar, ist die Aufnahme 325 durch mehrere, zu den Streben 316 korrespondierende, durchgehende Bohrungen gebildet und an einem dem Regelkörper 20 zugewandten axialen Ende 326 des Trägerelements 32 angeordnet, insbesondere an einer von dem Trägerelement 32 radial hervorstehenden Schulter 324 zwischen einer dem Regelkörper 20 zugewandten axialen Träger-Stirnseitenfläche 321 und einer ersten dem Regelkörper 20 abgewandten axialen Träger-Anlagefläche 322. Hierbei liegt das Trägerelement 32 sowohl mit der dem Regelkörper 20 zugewandten Träger-Stirnseitenfläche 321 als auch mit der ersten dem Regelkörper 20 abgewandten axialen Träger-Anlagefläche 322 an dem Dichtelement 31 an.

Grundsätzlich kann der Befestigungsabschnitt 315 bereits beim Herstellen des Dichtelements 31 entstehen, so dass zunächst die Streben 316 von einem axialen Ende des Dichtelements 31 axial hervorstehen und die Streben 316 nach Einführen in die Aufnahme 325 an der ersten dem Regelkörper 20 abgewandten Träger-Anlagefläche 322 derart verändert bzw. verformt werden, dass ein axiales Bewegen des Dichtelements 31 relativ zu dem Trägerelement 32 verhindert ist. Beispielsweise können die Streben 316 an ihren freien Enden aufgeschmolzen, um die Schulter 324 gebogen und/oder durch Aufspritzen von zusätzlichem Material des Dichtelements 31 hergestellt werden. Alternativ und bevorzugt wird das gesamte Dichtelement 31 durch ein Aufspritzen auf das Trägerelement 32 hergestellt.

Das Trägerelement 32 weist an dem dem Regelkörper 20 zugewandten axialen Ende 326 eine zu der Außenkontur 22 des Regelkörpers 20 komplementär gekrümmte Stirnseite 326a und an einem dem Regelkörper 20 abgewandten axialen Ende 327 eine In einer Ebene senkrecht zur Dichtungs-Längsachse A2 angeordnete Stirnseite 327a auf. An dem axialen Ende 327 liegt das Trägerelement 32 mit einer dem Regelkörper 20 abgewandten axialen Stirnseitenfläche 323 an dem Federelement 33 an. Dadurch kann das Trägerelement 32 als Zwischenstück zwischen dem gekrümmt ausgebildeten Dichtring 31a und dem eine axiale Anlagefläche aufweisenden Federelement 33 dienen, wodurch die axiale Vorspannkraft der Feder 33 besonders homogen über den Umfang auf das Dichtelement 31 übertragen und somit eine nahezu senkrecht zur Dichtfläche ausgebildete Anpresskraft erreicht werden kann.

Hieraus folgt, dass das Drehschieberventil sowohl eine platzsparende Bauform als auch eine hohe Dichtigkeit eines Einlasses gegenüber einem Auslass aufweist, da die Dichtungseinheit am radialen Anschluss des zylindrischen Regelkörpers durch entsprechende Ausgestaltung eine über den Umfang gleichmäßige Dichtwirkung entfaltet. Dies führt zu einer dauerhaft störungsfreien und zuverlässigen Abdichtung.

Es sollte deutlich sein, dass der Schutzbereich des vorliegenden Hauptanspruchs nicht auf das beschriebene Ausführungsbeispiel beschränkt ist, sondern verschiedene Modifikationen möglich sind, wobei der Schutzbereich einzig durch die nachfolgenden Ansprüche definiert ist. Insbesondere können durch Abänderung der Verbindungen zwischen Dichtelement, Trägerelement und Federelement weitere nicht dargestellte Ausführungsbeispiele generiert sein. Beispielsweise kann die am Trägerelement ausgebildete Aufnahme nach radial außen offen sein, so dass das Dichteelement mit einem Teil, beispielsweise Streben, von radial außen in die Aufnahme des Trägerelements eingesetzt werden kann. Alternativ wäre auch eine nur einseitig axial offene Aufnahme möglich, in die die Streben axial eingeschoben werden können.

### Bezugszeichenliste

- 1: Drehschieberventil
- 10: Ventilgehäuse
- 11: erster Ventilanschluss
- 12: zweiter Ventilanschluss

- 20: Regelkörper
- 21: Strömungskanal
- 22: Außenkontur

- 30: Dichtungseinheit
- 31: Dichtelement
- 31a: Dichtring
- 310: Dichtungs-Schenkel
- 311: Dichtungs-Stirnseitenfläche
- 312: Anlagefläche
- 313: Anlagefläche
- 314: Stirnseitenfläche
- 315: Befestigungsabschnitt
- 316: Strebe
- 317: axiales Ende

- 32: Trägerelement
- 321: Träger-Stirnseitenfläche
- 322: Träger-Anlagefläche
- 323: Träger-Stirnseitenfläche
- 324: Schulter
- 325: Aufnahme
- 326: axiales Ende
- 326a: Stirnseite
- 327: axiales Ende
- 327a: Stirnseite
- 33: Federelement
- 33a: Federring

- 100: Ventileinlass
- 200: Ventilauslass
- P1: Fluiddruck
- P2: Fluiddruck
- A1: Ventil-Längsachse
- A2: Dichtungs-Längsachse
- H1: Axial-Höhe, Aufbauhöhe
- D1: Innendurchmesser
- D2: Außendurchmesser
- D1a: Innendurchmesser
- D2a: Außendurchmesser

## Patentansprüche

1. Drehschieberventil (1) für einen Kraftfahrzeug-Kühlkreislauf, mit
- einem Ventilgehäuse (10),
- einem Regelkörper (20), der beweglich in dem Ventilgehäuse (10) angeordnet ist und eine zylindrische Außenkontur (22) aufweist, wobei durch Bewegung des Regelkörpers (20) ein Durchströmungsquerschnitt (21) zwischen einem ersten Ventilanschluss (11) und einem senkrecht zu einer Ventil-Längsachse (A1) des Regelkörpers (20) angeordneten zweiten Ventilanschluss (12) regelbar ist, und
- einer Dichtungseinheit (30), die innerhalb des zweiten Ventilanschlusses (12) auf die Außenkontur (22) des Regelkörpers (20) aufgesetzt ist,
wobei die Dichtungseinheit (30) ein Dichtelement (31) zur gleitbeweglichen Abdichtung, ein Trägerelement (32) zum Tragen zumindest des Dichtelements (31) und ein Federelement (33) zur axialen Vorspannung des Dichtelements (31) aufweist, wobei das Dichtelement (31) mit einer dem Regelkörper (20) zugewandten axialen Dichtungs-Stirnseitenfläche (311) an der Außenkontur (22) des Regelkörpers (20) anliegt, und das Trägerelement (32) mit einem dem Regelkörper (20) zugewandten ersten axialen Ende (326) an dem Dichtelement (31) und mit einem dem Regelkörper (20) abgewandten zweiten axialen Ende (327) an dem Federelement (33) anliegt,
**dadurch gekennzeichnet, dass**
das Dichtelement (31) einen axialen Befestigungsabschnitt (315) aufweist, der sich durch eine axiale Aufnahme (325) des Trägerelements (32) erstreckt, die als Bohrung Nut oder Hinterschneidung des Trägerelementes (32) ausgebildet ist, und über die das Dichtelement am Trägerelement befestigt ist, wobei die axiale Aufnahme (325) des Trägerelementes (32) korrespondierend zum Befestigungsabschnitt (315) des Dichtelementes (31) ausgebildet ist.

2. Drehschieberventil (1) nach Anspruch 1,
**dadurch gekennzeichnet, dass**
das Dichtelement (31) sowohl in einem entspannten Zustand als auch in einem vorgespannten Zustand als ein zu der Außenkontur (22) des Regelkörpers (20) komplementär gekrümmter Dichtring (31a) ausgebildet ist.

3. Drehschieberventil (1) nach einem der Ansprüche 1 oder 2,
**dadurch gekennzeichnet, dass**
das Dichtelement (31) auf das Trägerelement (32) aufgespritzt ist.

4. Drehschieberventil (1) nach einem der voranstehenden Ansprüche,
**dadurch gekennzeichnet, dass**
das Dichtelement (31) einen umlaufenden radialen Schenkel (310) aufweist, mit dem das Dichtelement (31) an dem Ventilgehäuse (10) und/oder einem Auslassstutzen (60) radial anliegt.

5. Drehschieberventil (1) nach einem der voranstehenden Ansprüche,
**dadurch gekennzeichnet, dass**
das Dichtelement (31) eine dem Regelkörper (20) zugewandte axiale Anlagefläche (312) und eine dem Regelkörper (20) abgewandte axiale Anlagefläche (313) aufweist, wobei die dem Regelkörper (20) abgewandte axiale Anlagefläche (313) axial zwischen der dem Regelkörper (20) zugewandten axialen Anlagefläche (312) und der dem Regelkörper (20) zugewandten axialen Dichtungs-Stirnseitenfläche (311) angeordnet ist, und das Dichtelement (31) sowohl mit der dem Regelkörper (20) zugewandten axialen Anlagefläche (312) als auch mit der dem Regelkörper (20) abgewandten axialen Anlagefläche (313) an dem Trägerelement (32) anliegt.

6. Drehschieberventil (1) nach einem der voranstehenden Ansprüche,
**dadurch gekennzeichnet, dass**
das Dichtelement (31) einen Innendurchmesser (D1) und einen Außendurchmesser (D2) aufweist, die jeweils im Wesentlichen einem Innendurchmesser (D1a) und einem Außendurchmesser (D2a) des Trägerelements (32) entsprechen.

7. Drehschieberventil (1) nach einem der voranstehenden Ansprüche,
**dadurch gekennzeichnet, dass**
das Dichtelement (31) in dessen axialer Erstreckungsrichtung eine Axial-Höhe (H1) aufweist, die über den gesamten Umfang des Dichtelements (31) konstant ausgebildet ist.

8. Drehschieberventil (1) nach einem der voranstehenden Ansprüche,
**dadurch gekennzeichnet, dass**
das Dichtelement (31) in dem Befestigungsabschnitt (315) zumindest eine axiale Strebe (316) aufweist.

9. Drehschieberventil (1) nach einem der voranstehenden Ansprüche,
**dadurch gekennzeichnet, dass**
die Aufnahme (325) an einem dem Regelkörper (20) zugewandten axialen Ende (326) des Trägerelements (32) ausgebildet ist.

10. Drehschieberventil (1) nach einem der voranstehenden Ansprüche,
**dadurch gekennzeichnet, dass**
die Aufnahme (325) zumindest eine axiale Öffnung aufweist, die sich an einer von dem Trägerelement (32) radial hervorstehenden umlaufenden Schulter (324) von einer dem Regelkörper (20) zugewandten axialen Träger-Stirnseitenfläche (321) bis zu einer dem Regelkörper (20) abgewandten axialen Träger-Anlagefläche (322) erstreckt, wobei sowohl an der dem Regelkörper (20) zugewandten axialen Träger-Stirnseitenfläche (321) als auch an der dem Regelkörper (20) abgewandten axialen Träger-Anlagefläche (322) das Dichtelement (31) anliegt.

11. Drehschieberventil (1) nach einem der voranstehenden Ansprüche,
**dadurch gekennzeichnet, dass**
das Trägerelement (32) an einem dem Regelkörper (20) zugewandten axialen Ende (326) eine zu der Außenkontur (22) des Regelkörpers (20) komplementär gekrümmte Stirnseite (326a) und an einem dem Regelkörper (20) abgewandten axialen Ende (327) eine ebene Stirnseite (327a) aufweist.

12. Drehschieberventil (1) nach einem der voranstehenden Ansprüche,
**dadurch gekennzeichnet, dass**
das Federelement (33) an einer dem Regelkörper (20) abgewandten axialen Träger-Stirnseitenfläche (323) des Trägerelements (32) angeordnet ist und mit einem dem Regelkörper (20) abgewandten axialen Federende an einem am zweiten Ventilanschluss (12) angeordneten Anschlussstutzen (60) vorgespannt anliegt.

## Claims

1. Rotary slide valve (1) of a motor vehicle cooling circuit, comprising
- a valve housing (10),
- a control body (20) movably arranged in the valve housing (10) and having a cylindrical outer contour (22), wherein, by movement of the control body (20), it is possible to adjust a flow section (21) between a first valve port (11) and a second valve port (12) arranged perpendicular to a valve longitudinal axis (A1) of the control body (20), and
- a sealing unit (30) set on the outer contour (22) of the control body (20) within the second valve port (12),
wherein the sealing unit (30) comprises a sealing element (31) for slidable sealing, a support element (32) for supporting at least the sealing element (31), and a spring element (33) for the axial pretensioning of the sealing element (31), wherein the sealing element (31) rests against the outer contour (22) of the control body (20) by an axial sealing end face (311) facing the regulating body (20), and the carrier element (32) rests against the sealing element (31) by an axial end (326) facing to the control body (20) and rests on the spring element (33) by second axial end (327) facing away from the control body (20),
**characterized in that**
the sealing element (31) has an axial fastening portion (315) extending through an axial receptacle (325) of the carrier element (32) formed as a bore, groove or undercut in the support element (32), and via which the sealing element is fastened to the support element, the axial receptacle (325) of the support element (32) being formed corresponding to the fastening portion (315) of the sealing element (31).

2. Rotary slide valve (1) according to claim 1, **characterized in that** in both a relaxed state and in a pretensioned state, the sealing element (31) is configured as a sealing ring (31a) curved complementary to the outer contour (22) of the control body (20).

3. Rotary slide valve (1) according to one of claims 1 or 2, **characterized in that** the sealing element (31) is sprayed onto the carrier element (32).

4. Rotary slide valve (1) according to one of the preceding claims, **characterized in that** the sealing element (31) has a circumferential radial leg (310) by which the sealing element (31) rests radially on the valve housing (10) and/or an outlet port (60).

5. Rotary slide valve (1) according to one of the preceding claims, **characterized in that** the sealing element (31) has an axial contact surface (312) facing to the control body (20) and an axial bearing surface (313) facing away from the control body (20), the axial abutment surface (313) facing from the control body (20) being arranged axially between the axial contact surface (312) facing to the control body (20) and axial sealing end face (311) facing to the control body (20), and the sealing element (31) resting on the support element (32) both by the axial contact surface (312) facing to the control body (20) and the axial contact surface (313) facing away from the control body (20)

6. Rotary slide valve (1) according to one of the preceding claims, **characterized in that** the sealing element (31) has an inner diameter (D1) and an outer diameter (D2), each substantially corresponding to an inner diameter (D1a) and an outer diameter (D2a) of the support element (32).

7. Rotary slide valve (1) according to one of the preceding claims, **characterized in that** in its axial direction of extension, the sealing element (31) has an axial height (H1) that is constant over the entire circumference of the sealing element (31).

8. Rotary slide valve (1) according to one of the preceding claims, **characterized in that** the sealing element (31) has at least one axial strut (316) in the fastening portion (315).

9. Rotary slide valve (1) according to one of the preceding claims, **characterized in that** the receptacle (325) is formed in an axial end (326) of the carrier element (32) facing to the control body (20).

10. Rotary slide valve (1) according to one of the preceding claims, **characterized in that** the receptacle (325) has at least one axial opening, which extends on a circumferential shoulder (324) radially protruding from the support element (32) from an axial support end face (321) facing to the control body (20) to an axial support abutment surface (322) facing away from the control body (20), wherein the sealing element (31) rests both on the axial support end face (321) facing to the control body (20) and the axial support abutment surface (322) facing away from the control body (20).

11. Rotary slide valve (1) according to one of the preceding claims, **characterized in that** at an axial end (326) facing to the control body (20), the support element (32) has an end face (326a) curved complementarily to the outer contour (22) of the control body (20) and has a flat end face (327a) at an axial end (327) facing away from the control body (20).

12. Rotary slide valve (1) according to any one of the preceding claims, **characterized in that** the spring element (33) is arranged at an axial carrier end face (323) of the support member (32) facing away from the control body (20) and, by an axial spring end facing away from the control body (20), rests pretensioned against a connection port (60) arranged at the second valve port (12).

## Revendications

1. Valve à tiroir rotatif (1) pour circuit de refroidissement de véhicule automobile, comprenant
- un carter de valve (10),
- un corps de réglage (20) agencé de manière mobile dans le carter de valve (10) et comprend un contour extérieur cylindrique (22), le mouvement du corps de réglage (20) permettant de régler une section transversale d'écoulement (21) entre un premier orifice de valve (11) et un deuxième orifice de valve (12) perpendiculaire à un axe longitudinal (A1) de la valve du corps de réglage (20), et
- une unité d'étanchéité (30) appliquée sur le contour extérieur (22) du corps de réglage (20) dans le deuxième orifice de valve (12),
l'unité d'étanchéité (30) présentant un élément d'étanchéité (31) pour l'étanchéification par glissement, un élément de support (32) pour supporter au moins l'élément d'étanchéité (31) et un élément de ressort (33) pour la précontrainte axiale de l'élément d'étanchéité (31), l'élément d'étanchéité (31) s'appliquant contre le contour extérieur (22) du corps de réglage (20) par une face d'étanchéité frontale axiale (311) faisant face au corps de réglage (20), et l'élément de support (32) s'appliquant sur l'élément d'étanchéité (31) par une première extrémité axiale (326) faisant face au corps de réglage (20) et s'appliquant sur l'élément de ressort (33) par une deuxième extrémité axiale (327) détournée du corps de réglage (20),
**caractérisée en ce que**
l'élément d'étanchéité (31) présente une partie de fixation axiale (315) traversant un réceptacle axial (325) de l'élément de support (32) conçu sous forme d'alésage, rainure ou contre-dépouille dudit élément de support (32), et par laquelle ledit élément d'étanchéité est fixé sur ledit élément de support, ledit réceptacle axial (325) dudit élément de support (32) étant conçu de manière à correspondre à la partie de fixation axiale (315) l'élément d'étanchéité (31).

2. Valve à tiroir rotatif (1) selon la revendication 1, **caractérisée en ce que** l'élément d'étanchéité (31) est formé, à la fois dans un état détendu et dans un état précontraint, comme une bague d'étanchéité (31a) courbée complémentairement au contour extérieur (22) du corps de réglage (20)

3. Valve à tiroir rotatif (1) selon l'une des revendications 1 ou 2, **caractérisée en ce que** l'élément d'étanchéité (31) est pulvérisé sur l'élément porteur (32).

4. Valve à tiroir rotatif (1) selon l'une quelconque des revendications précédentes, **caractérisée en ce que** l'élément d'étanchéité (31) présente une branche radiale circonférentielle (310) par laquelle l'élément d'étanchéité (31) repose radialement sur le carter de valve (10) et/ou une orifice de sortie (60).

5. Valve à tiroir rotatif (1) selon l'une quelconque des revendications précédentes, **caractérisée en ce que** l'élément d'étanchéité (31) comprend une surface d'appui axiale (312) faisant face au corps de réglage (20) et une surface d'appui axiale (313) détournée du corps de réglage (20), la surface d'appui axiale (313) détournée du corps de réglage (20) étant disposée axialement entre le corps de réglage (20) opposé axialement à la surface de butée axiale (313) entre la surface d'appui axiale (312) faisant face au corps de réglage (20) et la face d'étanchéité frontale axiale (311) faisant face au corps de réglage (20), et ledit corps de réglage (20) s'appuyant sur ledit élément de support (32) par la surface d'appui axiale (312) faisant face au corps de réglage (20) et la surface d'appui axiale (313) détournée du corps de réglage (20).

6. Valve à tiroir rotatif (1) selon l'une quelconque des revendications précédentes, **caractérisée en ce que** l'élément d'étanchéité (31) présente un diamètre interne (D1) et un diamètre externe (D2), chacun correspondant sensiblement à un diamètre interne (D1a) et un diamètre externe (D2a) de l'élément de support (32).

7. Valve à tiroir rotatif (1) selon l'une quelconque des revendications précédentes, **caractérisé en ce que** l'élément d'étanchéité (31) présente dans son sens d'extension axial une hauteur axiale (H1) constante sur toute la circonférence de l'élément d'étanchéité (31).

8. Valve à tiroir rotatif (1) selon l'une quelconque des revendications précédentes, **caractérisée en ce que** l'élément d'étanchéité (31) présente au moins une entretoise axiale (316) dans la partie de fixation (315).

9. Valve à tiroir rotatif (1) selon l'une quelconque des revendications, **caractérisée en ce que** le réceptacle (325) est formé sur une extrémité axiale (326) de l'élément porteur (32) faisant face au corps de réglage (20).

10. Valve à tiroir rotatif (1) selon l'une quelconque des revendications, **caractérisée en ce que** le réceptacle (325) présente au moins une ouverture axiale sur un épaulement circonférentiel (324) en saillie radiale du corps de réglage (20), l'ouverture s'étendant d'une surface d'étanchéité frontale axiale (321) dudit support faisant face au corps de réglage (20) jusqu'à une surface d'appui axiale (322) dudit support détournée du corps de réglage (20), l'élément d'étanchéité (31) reposant sur la surface d'étanchéité frontale axiale (321) dudit support faisant face au corps de réglage (20) et la surface d'appui axiale (322) dudit support détournée du corps de réglage (20).

11. Valve à tiroir rotatif (1) selon l'une quelconque des revendications précédentes, **caractérisée en ce qu'**à une extrémité axiale (326) faisant face au corps de réglage (20), l'élément porteur (32) comprend une face frontale (326a) recourbée de manière complémentaire au contour extérieur (22) du corps de réglage (20), et comprend une face frontale (327a) plane à une extrémité axiale (327) détournée du corps de réglage (20).

12. Valve à tiroir rotatif (1) selon l'une quelconque des revendications précédentes, **caractérisée en ce que** l'élément de ressort (33) est disposé sur une surface frontale axiale (323) dudit support détournée du corps de réglage (20) et, par une extrémité axiale du ressort détournée du corps de réglage (20), repose de manière sollicitée sur une orifice de connexion (60) disposée sur le deuxième orifice de valve (12).
